# EUROPEAN PATENT APPLICATION

(11) **EP 4 455 248 A1**
(43) Date of publication of application: **30.10.2024**
(21) Application number: 23181901.2
(22) Date of filing: 27.06.2023
(51) Int. Cl.: C09K 5/06, C08L 1/00, C08L 3/00, C08L 5/00, F28F 23/02

(54) **PHASE CHANGE MATERIAL WITH SHAPE STABILISATION, METHOD FOR PRODUCING THEREOF AND USE THEREOF**

(30) Priority: 28.04.2023 PL 44466323
(71) Applicant: Akademia Gorniczo-Hutnicza im. Stanislawa Staszica w Krakowie, 30-059 Krakow (PL)
(72) Inventor: SZATKOWSKA, Martyna, 33-271 Jadowniki Mokre (PL); PIELICHOWSKA, Kinga, 30-079 Kraków (PL)
(74) Representative: Wlasienko, Jozef

(57) **Abstract**

The subject matter of the invention is a phase change material with shape stabilisation containing a sugar alcohol and a polysaccharide in a weight ratio of 50:50 to 90: 10.

The subject matter of the invention is a method for producing the above-defined phase change material with shape stabilisation comprising the following steps:
a) producing a dispersion of a polysaccharide, a sugar alcohol and a solvent by mixing the polysaccharide, the sugar alcohol and the solvent and heating to a temperature in the range of 50°C to 90°C, wherein the weight ratio of the sugar alcohol to the polysaccharide in the dispersion is in the range of 50:50 to 90: 10 and the combined concentration of the sugar alcohol and the polysaccharide in the dispersion is a maximum of 5%;
b) maintaining the dispersion produced in step a), with stirring, at the temperature used in step
a) for 10 to 20 minutes to produce gel; and
c) drying the gel obtained in step b).

The subject matter of the invention is also use of a phase change material with shape stabilisation, containing a sugar alcohol and a polysaccharide in a weight ratio ranging from 50:50 to 90:10, for thermal energy storage.

## Description

The subject matter of the invention is a phase change material with shape stabilisation, a method for producing the material and use thereof for thermal energy storage, especially in devices that heat up during operation, where heat is lost.

Materials that can be used as phase change materials must be characterized by a high latent heat of phase transition, so that they are able to store a greater amount of thermal energy in unit mass of substance. Examples of compounds described in the literature as phase change materials are sugar alcohols. Specifically, sugar alcohols (xylitol, d-mannitol, dulcitol, myo-inositol, d-sorbitol, meso-erythritol) are described in a number of publications among other things "Carbon-based material included-shaped stabilised phase change materials for sunlight-driven energy conversion and storage: An extensive review" edited by Sara Tahan Latibaria, Seyed Mojtaba Sadramelib [S.T. Latibaria, S.M. Sadramelib, Carbon-based material included-shaped stabilised phase change materials for sunlight-driven energy conversion and storage: An extensive review, Solar Energy 170, 2018, Elsevier, p. 1130-1161] as medium-temperature phase change materials (90-200°C) with a liquid-solid phase transition. Their main advantage is having almost twice higher latent heat compared to other organic materials [K. Pielichowska, K. Pielichowski, Phase change materials for thermal energy storage, Progress in Materials Science 65, 2014, Elsevier, p. 67-123]. In addition, they have properties such as high density, thermal stability, non-toxicity, non-flammability and they are environmentally friendly. Similar to other organic materials, sugar alcohols are characterised by low thermal conductivity, high degree of supercooling and volume changes during phase transitions.

Due to the change in volume of the material during the transition from the solid phase to liquid, studies are carried out on the possibility of stabilising the shape and obtaining a composite characterised by a solid-solid phase transition.

Numerous examples of shape stabilisation of sugar alcohols are known in the literature, namely described are: fibres infused with phase change material (with polysaccharides: sorbitol, erythritol, xylitol, mannitol) [B. Biller, R.L. Dudman, M. Bartos, Shape stabilised phase-change material for heat retentive applications, US20180215981A1, 2016], erythritol impregnated into carbon fibre [K. Dong, N. Sheng, D. Zou, C. Wang, K. Shimono, T. Akiyama, T. Nomura, A high-thermal-conductivity, high-durability phase-change composite using a carbon fibre sheet as a supporting matrix, Applied Energy, 264, 2020], phase change material (one of sugar alcohols) placed in the pores of mesoporous magnesium hydroxide (Mg(OH)₂) [M.H. Zahir, M.M. Hossain, M.M. Rahman, S. Billel, SHAPE-STABILIZED PHASE CHANGE MATERIALS FOR ENERGY STORAGE, US20210102106A1, 2019], erythritol placed in the pores of perlite, silica earth and gamma aluminium oxide [T. Nomura, N. Okinaka, T. Akiyama, Impregnation of porous material with phase change material for thermal energy storage, Materials Chemistry and Physics, 115, 2009, 5 846-850], mannitol stabilised in the pores of silicon oxide [A. Sagara, T. Nomura, M. Tsubota, N. Okinaka, T. Akiyama, Improvement in thermal endurance of D-mannitol as phase-change material by impregnation into nanosized pores, Materials Chemistry and Physics, 146, 3, 2014, 253-260], and mannitol stabilized with biomass-derived carbonaceous aerogel [H. Liu, Z. Qian, Q. Wang, D. Wu, X. Wang, Development of Renewable Biomass-Derived Carbonaceous Aerogel/Mannitol Phase-Change Composites for High Thermal-Energy-Release Efficiency and Shape Stabilisation, ACS Appl. Energy Mater., 4, 2, 2021, 1714-1730]. In addition, materials containing sugar alcohols with carbon additives are known, e.g. erythritol with mannitol in combination with exfoliated graphite [J. Zeng, Y.Chen, L. Shu, L. Yu, L. Zhu, L. Song, Z. Cao, L. Sun Preparation and thermal properties of exfoliated graphite/erythritol/mannitol eutectic composite as form-stable phase change material for thermal energy storage, Solar Energy Materials and Solar Cells, v.178, 2018, 84-90], erythritol stabilised with graphene oxide [Y. Wang, Z. Zhang, T. Zhang, Z. Qin, D. Zhang, H. Ji, Preparation and Characterization of Erythritol/Graphene Oxide Shape-Stable Composites with Improved Thermal-Physical Property, Chemistry Select, 4 2019, 1149 - 20 1157], erythritol stabilized with expanded graphite [S.Y. Lee, H.K. Shin, M. Park, K.Y. Rhee, S.J. Park, Thermal characterisation of erythritol/expanded graphite composites for high thermal storage capacity, CARBON, 68, 2014, 67-72], mannitol stabilised with graphene nanoplatelets [G. Jing, X. Dehong, W. Li, A. Wenqing, Q. Zhaodong, Low concentration graphene nanoplatelets for shape stabilisation and thermal transfer reinforcement of 25 Mannitol: a phase change material for a medium-temperature thermal energy system, Materials Research Express, 5, 2018], and xylitol with expanded graphite [H. Zhou, L. Lv, Y. Zhang, M. Ji, K. Cen, Preparation and characterisation of a shape-stable xylitol/expanded graphite composite phase change material for thermal energy storage, Solar Energy Materials and Solar Cells, v.230, 2021]. Compositions of phase change materials consisting of three component materials are also known, i.e. sepolite-stabilised erythritol with addition of exfoliated graphite [N. Tan, T. Xie, Y. Feng, P. Hu, Q. Li, L.M. Jiang, W.B. Zeng, J.L. Zeng, Preparation and characterisation of erythritol/sepiolite/exfoliated graphite nanoplatelets form-stable phase change material with high thermal conductivity and suppressed supercooling, Solar Energy Materials and Solar Cells, 217, 2020], erythritol stabilised in nickel foam containing nickel particles with reduced graphene oxide [R. Yang, X. Huang, G. Zhao, Z. Liu, G. Wang, Ni@rGO into nickel foam for composite polyethylene glycol and erythritol phase change materials, Chemical Engineering Journal, 451, 2023] and mannitol stabilised in the pores of nickel foam enriched with carbon nanotubes [M. Wang, 5 Z. Wu, A. Liu, Y. Wang, H. Xie, Carbon nanotube/nickel foam-mannitol phase change composite material for medium-temperature solar energy storage and conversion, Journal of Energy Storage, 55, 2022]. In addition, examples of stabilisation of sugar alcohols with polymers are known, e.g. erythritol stabilised with poly(vinyl alcohol) with addition of sodium citrate dihydrate [M. R. Yazdani, J. Etula, J. B. Zimmerman, A. Seppäläa, Ionic cross-linked polyvinyl alcohol tunes vitrification and cold-crystallisation of sugar alcohol for long-term thermal energy storage, The Royal Society of Chemistry, 2020], polyol (erythritol or d-mannitol) dispersed in a sodium polyacrylate matrix [S. Puupponen, A. Seppälä, Cold-crystallisation of polyelectrolyte-adsorbed polyol for long-term thermal energy storage, Solar Energy Materials and Solar Cells, 180, 2018, 59-66], erythritol stabilised with high-density polyethylene [S. Chai, K. Sun, D. Zhao, Y. Kou, Q. Shi, Form-Stable Erythritol/HDPE Composite Phase Change Material with Flexibility, Tailorability, and High Transition Enthalpy, ACS Applied Polymer Materials, 2020] and mannitol stabilised with high-density polyethylene with the addition of expanded graphite to improve thermal conductivity properties [H. Wang, Z. Rao, L. Li, S. Liao, A novel composite phase change material of high-density polyethylene/d-mannitol/expanded graphite for medium-temperature thermal energy storage: Characterisation and thermal properties, Journal of Energy Storage, 60, 2023]. Additionally, disclosed in the literature is: a system containing myo-inositol with the addition of aluminium oxide nanoparticles (Al₂O₃) and copper (II) oxide (CuO) nanoparticles [D.K. Singh, S. Suresh, H. Singh, B.A.J. Rose, S. Tassou, N. Anantharaman, Myo-Inositol-based nano-PCM for solar thermal energy storage, Applied Thermal Engineering, 110, 2017, 564-572], and xylitol infiltrated into an aluminium template (by dissolution and by melting) [P. He, G. Niu, L. Zhou, W. Li, X. Zhang, F. He, Fabrication and characterization of phase change composite materials via xylitol infiltrating aligned alumina template Materials Letters, 232, 2018, 1-4].

Examples of shape stabilisation of phase change materials with polysaccharides are also known in the literature, e.g. shape stabilisation of poly(ethylene glycol) (PEG) with chitosan [S. B. Sentürk, D. Kahraman, C. Alkan, I. Gökce Biodegradable PEG/cellulose, PEG/agarose and PEG/chitosan blends as shape stabilised phase change materials for latent heat energy storage, Carbohydrate Polymers, V. 84, 2011, 141-144], shape stabilisation of poly(ethylene oxide) with starch [K. Pielichowska, K. Pielichowski Novel Biodegradable Form Stable Phase Change Materials: Blends of Poly(ethylene oxide) and Gelatinized Potato Starch, Journal of Applied Polymer Science, V.116, 2010, 1725-1731], use of sodium alginate as a matrix to stabilize the shape of n-octadecane [S.H. Lee, 5 H. Chae, N.Y. Kim, B.G. Min, In situ Shape-Stabilisation of n-Octadecane PCM in Alginate Matrix through Formation of Emulsion and Solidification by Ionic Crosslinking, Fibers and Polymers, 23, 2022, 2494-2501], use of sodium alginate to stabilise the shape of MXene phase change material [X. Ye, Y. Ma, Z. Tian, H. Sun, Z. Zhu, J. Li, W. Liang, A. Li, Shape-stable MXene/sodium alginate/carbon nanotubes hybrid phase change material composites for efficient solar energy conversion and storage, Composites Science and Technology, 230, 2022], and use of sodium alginate to stabilise sodium sulfate decahydrate [L. Meng, A.S. Ivanov, S. Kim, X. Zhao, N. Kumar, A. Young-Gonzales, T. Saito, W. Bras, K. Gluesenkamp, V. Bocharova, Alginate-Sodium Sulfate Decahydrate Phase Change Composite with Extended Stability, ACS Appl. Polym. Mater., 4, 2022, 6563-6571] was disclosed. In addition, the use of polysaccharides to produce microcapsules/microspheres is known, e.g. use of chitosan to obtain magnetic microspheres with paraffin-based phase change material [X. Chen, Y. Zhao, Y. Zhang, A. Lu, X. Li, L Liu, G. Qin, Z. Fang, J. Zhang, Y. Liu, A novel design and synthesis of multifunctional magnetic chitosan microsphere based on phase change materials, Materials Letters, 237, 2019, 185-187], use of chitosan to obtain phase change material microcapsules [S. S. Deveci, G. Basal Preparation of PCM microcapsules by complex coacervation of silk fibroin and chitosan, Colloid Polym Sci, 287, 2009, 1455-1467], and use of starch as the outer layer of phase change material microcapsules [F. Irani, Z. Ranjbara, S. Moradian, A. Jannesari, Microencapsulation of n-heptadecane phase change material with starch shell, Progress in 25 Organic Coatings, 113, 2017, 31-38; F. Irani, Z. Ranjbara, A. Jannesari, S. Moradian, Fabrication and characterisation of microencapsulated n-heptadecane with graphene/starch composite shell for thermal energy storage, Progress in Organic Coatings, 131, 2019, 203-210] was described. Additionally, examples of the use of starch as a phase change material modifier [Q. Kong, H. Mu, Y. Han, W. Wu, C. Tong, X. Fang, R. Liu, H. 30 Chen, H. Gao, Biodegradable phase change materials with high latent heat: Preparation and application on Lentinus edodes storage, Food Chemistry, 364, 2021], producing of poly(vinyl alcohol) blend with starch [T.T. Tee, L.T. Sin, R. Gobinath, S.T. Bee, D. Hui, A.R. Rahmat, I. Kong, Q. Fang, Investigation of nano-size montmorillonite on enhancing polyvinyl alcohol-starch blends prepared via solution cast approach, Composites: Part B 47, 2013, 238-247] and use of chitosan and sodium alginate to produce foam with polyrotaxane and use thereof as a shape stabiliser for PEG [G.Z. Yin, X.M. Yang, A.M. L'opez, M.T. Wang, W. Ye, B. Xu, D.Y. Wang, Sodium alginate and Chitosan aided design of form-stable Polyrotaxane-based phase change materials with ultra-high latent heat, International Journal of Biological Macromolecules, 222, 2022, 429-437] can be found in the literature.

Despite the many known phase change materials with shape stabilisation, there is still a need in the field for a material that is capable of long-term and multi-cycle thermal energy storage, that does not change the volume during phase transitions and is composed of natural and biodegradable ingredients, so that there is no problem with its disposal at the end of its utilization. In addition, there is a need for simple and efficient way to produce such material.

The subject matter of the invention is a phase change material with shape stabilisation containing a sugar alcohol and a polysaccharide in a weight ratio of 50:50 to 90:10.

Preferably, the polysaccharide is selected from the group including starch, chitosan, chitin, sodium alginate, cellulose, cellulose acetate, carboxymethyl cellulose, methylhydroxy cellulose, gellan gum or a mixture thereof.

Preferably, the sugar alcohol is a sugar alcohol having 4 to 12 carbon atoms in the molecule or a mixture of such alcohols, and more preferably a sugar alcohol having 6 carbon atoms in the molecule or a mixture of such alcohols.

The subject matter of the invention is a method for producing the above-defined phase change material with shape stabilisation comprising the following steps:
a) producing a dispersion of a polysaccharide, a sugar alcohol and a solvent by mixing the polysaccharide, the sugar alcohol and the solvent and heating to a temperature in the range of 50°C to 90°C, wherein the weight ratio of the sugar alcohol to the polysaccharide in the dispersion is in the range of 50:50 to 90: 10 and the combined concentration of the sugar alcohol and the polysaccharide in the dispersion is a maximum of 5%;
b) maintaining the dispersion produced in step a), with stirring, at the temperature used in step a) for 10 to 20 minutes to produce gel; and
c) drying the gel obtained in step b).

Preferably, in step a) firstly a sugar alcohol is stirred with a solvent to produce a solution which is heated to a temperature in the range of 50°C to 90°C and subsequently a polysaccharide is added to the solution to produce a dispersion of polysaccharide, sugar alcohol and solvent.

Preferably, starch, chitosan, chitin, sodium alginate, cellulose, cellulose acetate, carboxymethyl cellulose, methylhydroxy cellulose, gellan gum or a mixture thereof is used as the polysaccharide.

Preferably, a sugar alcohol having 4 to 12 carbon atoms in the molecule or a mixture of such alcohols is used as the sugar alcohol, and more preferably a sugar alcohol having 6 carbon atoms in the molecule or a mixture of such alcohols is used as the sugar alcohol.

Preferably, water or a mixture thereof with a weak organic acid is used as the solvent.

Preferably, acetic acid, formic acid, lactic acid or oxalic acid is used as the weak organic acid.

Preferably, the weak organic acid is added in an amount sufficient to obtain a pH of the dispersion in the range from 4.0 to 6.5.

Preferably, step c) is carried out in the following two steps:
c1) drying the gel at room temperature for 24 to 48 h; and
c2) drying the gel at a temperature in the range of 50°C to 80°C for 24 to 48 h.

The subject matter of the invention is also use of a phase change material with shape stabilisation, containing a sugar alcohol and a polysaccharide in a weight ratio ranging from 50:50 to 90:10, for thermal energy storage.

The phase change material produced by the method according to the invention containing the sugar alcohol stabilised with the polysaccharide is characterised by shape stabilisation above the melting point of the sugar alcohol and solid-solid phase transition. This may result from the presence of hydrogen bonds formed between the -OH hydroxyl groups found in sugar alcohols and polysaccharides. The gelation of the dispersion taking place in water determines the formation of new hydrogen bonds, which are responsible for stabilising the shape of the phase change material. The resulting material is capable of long-term and multi-cycle thermal energy storage.

The schematic arrangement of hydrogen bonds in the phase change material containing the sugar alcohol and the polysaccharide and the results of studies on the material according to the invention are shown in Figures:

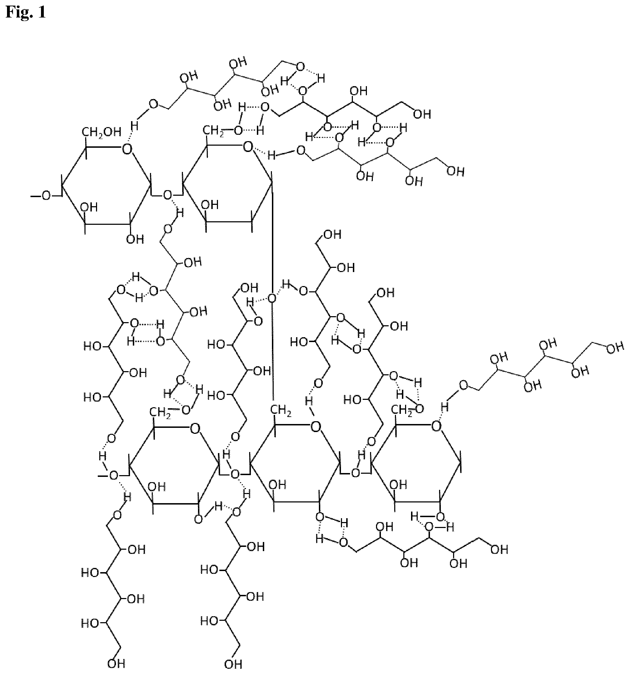

Fig. 1 shows the schematic arrangement of hydrogen bonds in the dulcitol/amylopectin material;

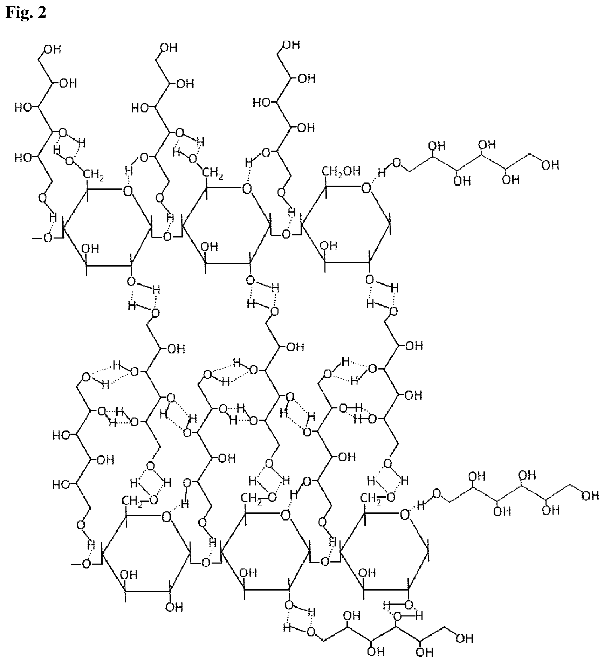

Fig. 2 shows the schematic arrangement of hydrogen bonds in the dulcitol/amylose material;
Fig. 3a and 3b show the results of a study by DSC for the phase change material according to the invention, for the heating and cooling cycles, respectively.

In the context of the present invention, the choice of the sugar alcohol depends on the temperature at which the thermal energy will be stored and the temperature of the phase transition of the sugar alcohol - it means that the sugar alcohol is selected for the specific application. A suitable alcohol for use in the solutions according to the present invention is a sugar alcohol containing 4 to 12 carbon atoms in the molecule selected from the group comprising dulcitol, myo-inositol, d-mannitol, isomalt, lactitol, D-lactitol, maltitol, palatinitol and trehalose. A mixture containing two or more of the above-mentioned alcohols may also be used. Preferably, a sugar alcohol containing 6 carbon atoms in the molecule or a mixture of such alcohols is used.

A suitable polysaccharide for use in the solutions according to the present invention is a polysaccharide selected from the group including starch, chitosan, chitin, sodium alginate, cellulose, cellulose acetate, carboxymethyl cellulose, methylhydroxy cellulose or gellan gum. A mixture containing two or more of the above-mentioned polysaccharides may also be used.

A suitable solvent for use in the solutions according to the present invention is water or a mixture of water with weak organic acid. Acetic acid, formic acid, lactic acid or oxalic acid are used as the organic acid. The organic acid is added in the amount necessary to obtain a pH of the dispersion in the range of 4.0 to 6.5, which is measured with a pH meter during the addition of the acid.

In the first step of the method according to the invention, the individual ingredients of the dispersion are stirred and heated, wherein the sequence of addition and heating is arbitrary and any scheme used will lead to the material according to the invention. For example, all the ingredients are added to the solvent simultaneously and subsequently the resulting dispersion is heated to a temperature in the range of 50°C to 90°C or, preferably, the sugar alcohol is first stirred with the solvent to produce a solution, which is heated to a temperature in the range of 50°C to 90°C and subsequently the polysaccharide is added to the solution to produce the dispersion.

The sugar alcohol and the polysaccharide are stirred in a weight ratio being in the range of 50:50 to 90:10, wherein the combined concentration of both ingredients in the dispersion is a maximum of 5%, preferably from 1 to 5%.

In the next step, the resulting dispersion is maintained with stirring at the temperature to which it was heated in the first step, for 10 to 20 minutes until the dispersion gels.

As mentioned above, in the method for producing the phase change material according to the invention a temperature in the range of 50°C to 90°C is used, which is the gelation temperature of the dispersion containing the sugar alcohol and the polysaccharide. The gelation temperature depends on the polysaccharide used and the desired gelation rate of the dispersion. Generally the higher the temperature, the faster gelation occurs. For example, at a given temperature chosen from the above range, gelation of dispersions containing different polysaccharides can be carried out with the difference that the gelation rate of each dispersion will be different.

In the final step, the drying of the resulting gel is carried out, preferably in two following steps:
c1) drying the gel at room temperature for 24 to 48 h; and
c2) drying the gel at a temperature in the range of 50°C to 80°C for 24 to 48 h.

The drying time in both steps and the temperature used in the second step depend on the polysaccharide and the sugar alcohol used. The minimum drying time is 24 hours, however, it can be extended to 48 hours in case the material is not sufficiently dried in a shorter time.

The invention is illustrated by, but not limited to, the following examples,

### Example 1

Preparation of the material begins by weighing out 5 g of the ingredients in a weight ratio of dulcitol to starch of 50:50. Subsequently 95 ml of distilled water is measured in a measuring cylinder. The measured water is poured into a conical flask, the dulcitol is added and the flask is placed in a water bath to dissolve the dulcitol and is heated to the temperature of 73°C. In the next step, the weighed starch is added and the mixture is stirred. The combined concentration of dulcitol and starch in the dispersion is 5%. The resulting dispersion is left with stirring at the temperature of 73°C for about 20 minutes after adding the starch (until the system gels) in a water bath. The resulting gel is poured onto petri dishes, left to dry for 24 h at room temperature and then is dried for 24 h in an oven at the temperature of 60°C.

### Example 2

The preparation of the material begins by weighing out 3 g of the ingredients in a weight ratio of dulcitol to chitosan of 90:10. Subsequently 97 ml of a mixture containing distilled water and acetic acid is measured. The amount of acetic acid is 1 ml per 1 g of chitosan, and water is used in the amount necessary to obtain 97 ml of the mixture. The measured mixture of water and acetic acid is poured into a conical flask, the dulctiol is added and the flask is placed in a bath to dissolve the dulcitol and is heated to the temperature of 73°C. In the next step, the weighed chitosan is added and the mixture is stirred. The combined concentration of dulcitol and chitosan in the dispersion is 3%. The resulting dispersion is left with stirring at the temperature of 73°C for 20 minutes after adding the chitosan (until the system gels) in a water bath. The resulting gel is poured onto petri dishes, left to dry for 24 h at room temperature and then is dried for 24 h in an oven at the temperature of 50°C.

### Example 3

Preparation of the material begins by weighing out 3 g of the ingredients in a weight ratio of dulcitol to sodium alginate of 50:50. Subsequently 97 ml of distilled water is measured. The measured water is poured into a conical flask, the dulcitol is added and the flask is placed in a bath to dissolve the dulcitol and is heated to the temperature of 80°C. In the next step, the weighed sodium alginate is added and the mixture is stirred. The combined concentration of dulcitol and sodium alginate in the dispersion is 3%. The resulting dispersion is left with stirring at the temperature of 80°C for 20 minutes after adding the sodium alginate (until the system gels) in a water bath. The resulting gel is poured onto petri dishes, left to dry for 24 h at room temperature and then is dried for 24 h in an oven at the temperature of 50°C.

### Example 4

The preparation of the material begins by weighing out 3 g of the ingredients in a weight ratio of sugar alcohol to starch of 80:20. A mixture of myo-inositol and dulcitol in a weight ratio of 0.25:0.75 is used as the sugar alcohol. Subsequently 97 ml of distilled water is measured. The measured water is poured into a conical flask, the sugar alcohol mixture is added and the flask is placed in a bath to dissolve the mixture and is heated to the temperature of 73°C. In the next step, the weighed starch is added and the mixture is stirred. The combined concentration of starch and sugar alcohols in the dispersion is 3%. The resulting dispersion is left with stirring at the temperature of 73°C for 15 minutes after adding the starch (until the system gels) in a water bath. The resulting gel is poured onto petri dishes, left to dry for 24 h at room temperature and then is dried for 24 h in an oven at the temperature of 50°C.

### Example 5

The preparation of the material begins by weighing out 3 g of the ingredients in a weight ratio of d-mannitol to polysaccharide of 90:10. A mixture of starch and gellan gum in a weight ratio of 50:50 is used as the polysaccharide. Subsequently 97 ml of distilled water is measured. The measured water is poured into a conical flask, the d-mannitol is added and the flask is placed in a water bath to dissolve the d-mannitol and is heated to the temperature of 70°C. In the next step, the weighed polysaccharide mixture is added and the mixture is stirred. The combined concentration of d-mannitol and polysaccharides in the dispersion is 3%. The resulting dispersion is left with stirring at the temperature of 70°C for 15 minutes after adding the starch and gelan gum (until the system gels) in a water bath. The resulting gel is poured onto petri dishes, left to dry for 24 h at room temperature and then is dried for 24 h in an oven at the temperature of 50°C.

To confirm the ability of the phase change material with shape stabilisation to store thermal energy, a study was carried out on the material obtained in Example 1 (i.e. containing dulcitol and starch in a weight ratio of 50:50 and with the combined ingredient concentration of 5%). The study was carried out by differential scanning calorimetry (DSC) using a Mettler Toledo calorimeter with an intracooler. Analysis of the samples by differential scanning calorimetry allows to indicate the conditions under which a given system will exhibit the highest energy storage capacity. The material was heated from room temperature (25°C) to 240°C at a heating and cooling rate of 10 degrees per minute, in a nitrogen atmosphere (flow rate 30 ml/minute).

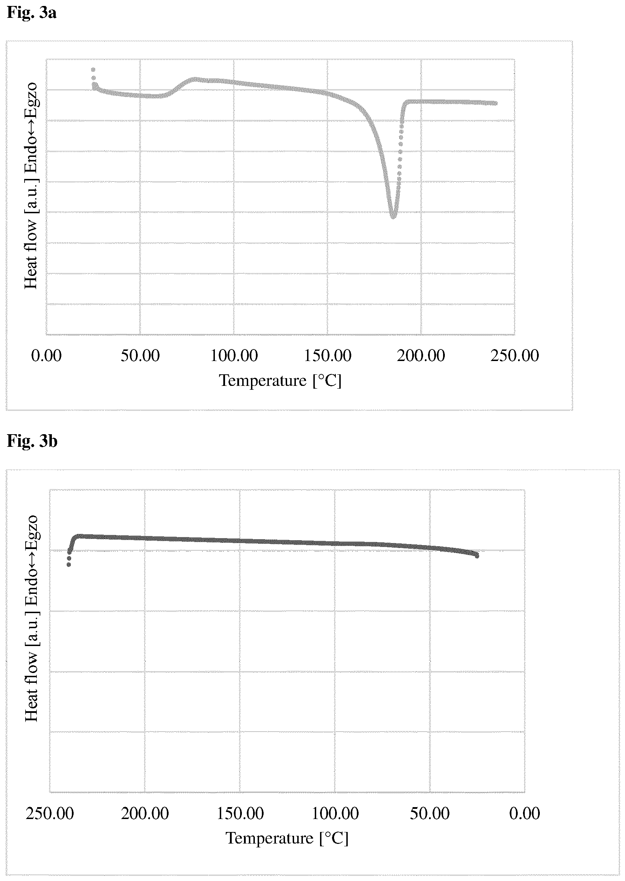

The results obtained are shown in Table 1 and Figures 3a and 3b.

**Table 1**

| Characteristic temperatures and heat of transition read from DSC curves | | | | | | |
|---|---|---|---|---|---|---|
| Weight ratio of dulcitol: starch | T_{cco} [°C] | T_{ccp} [°C] | T_{cce} [°C] | Q_{cc} [J/g] | Tₘ [°C] | Qₘ [J/g] |
| 50:50 | 64 | 80 | 151 | 68.97 | 185 | 75.47 |

where:
Tm - temperature of the solid-solid phase transition
Qm - heat of the solid-solid transition
Tcco - temperature at the onset of cold crystallisation
Tccp - "peak" temperature of cold crystallisation determined as the peak maximum on the DSC curve
Tcce - temperature at the end of the cold crystallisation process
Qcc - heat of cold crystallisation

In addition, samples of the materials obtained in the Examples were analysed by infrared spectroscopy (FTIR). The obtained results confirm the absence of chemical reactions taking place.

The solutions according to the invention can be used in industry and technology, especially in devices that heat up during operation, where heat loss occurs. An exemplary use of the material according to the invention consist in surrounding a device that heat up with the material according to the invention, whereupon heat is transferred to the material and can be given up once the cold crystallisation temperature is reached. The described material can also be used for multi-cycle thermal energy storage.

## Claims

1. A phase change material with shape stabilisation, **characterised in that** it contains a sugar alcohol and a polysaccharide in a weight ratio of 50:50 to 90:10.

2. The material according to claim 1, **characterised in that** the polysaccharide is selected from the group including starch, chitosan, chitin, sodium alginate, cellulose, cellulose acetate, carboxymethyl cellulose, methylhydroxy cellulose, gellan gum or a mixture thereof.

3. The material according to claim 1 or 2, **characterised in that** the sugar alcohol is a sugar alcohol having 4 to 12 carbon atoms in the molecule or a mixture of such alcohols.

4. The material according to claims 1-3, **characterised in that** the sugar alcohol is a sugar alcohol having 6 carbon atoms in the molecule or a mixture of such alcohols.

5. A method for producing the phase change material with shape stabilisation as defined in claims 1-4, **characterised in that** it comprises the following steps:
a) producing a dispersion of a polysaccharide, a sugar alcohol and a solvent by mixing the polysaccharide, the sugar alcohol and the solvent and heating to a temperature in the range of 50°C to 90°C, wherein the weight ratio of the sugar alcohol to the polysaccharide in the dispersion is in the range of 50:50 to 90:10 and the combined concentration of the sugar alcohol and the polysaccharide in the dispersion is a maximum of 5%;
b) maintaining the dispersion produced in step a), with stirring, at the temperature used in step a) for 10 to 20 minutes to produce gel; and
c) drying the gel obtained in step b).

6. The method according to claim 5, **characterised in that** in step a) firstly a sugar alcohol is stirred with a solvent to produce a solution which is heated to a temperature in the range of 50°C to 90°C and subsequently a polysaccharide is added to the solution to produce a dispersion of polysaccharide, sugar alcohol and solvent.

7. The method according to claims 5 or 6, **characterised in that** starch, chitosan, chitin, sodium alginate, cellulose, cellulose acetate, carboxymethyl cellulose, methylhydroxy cellulose, gellan gum or a mixture thereof is used as the polysaccharide.

8. The method according to claims 5-7, **characterised in that** a sugar alcohol having 4 to 12 carbon atoms in the molecule or a mixture of such alcohols is used as the sugar alcohol.

9. The method according to claim 8, **characterised in that** a sugar alcohol having 6 carbon atoms in the molecule or a mixture of such alcohols is used as the sugar alcohol.

10. The method according to claims 5-9, **characterised in that** water or a mixture thereof with a weak organic acid is used as the solvent.

11. The method according to claim 10, **characterised in that** acetic acid, formic acid, lactic acid or oxalic acid is used as the weak organic acid.

12. The method according to claim 11, **characterised in that** the weak organic acid is added in an amount sufficient to obtain a pH of the dispersion in the range from 4.0 to 6.5.

13. The method according to claims 5-12, **characterised in that** step c) is carried out in the following two steps:
c1) drying the gel at room temperature for 24 to 48 h; and
c2) drying the gel at a temperature in the range of 50°C to 80°C for 24 to 48 h.

14. Use of a phase change material with shape stabilisation, containing a sugar alcohol and a polysaccharide in a weight ratio ranging from 50:50 to 90:10, for thermal energy storage.
